# FASCICULE DE BREVET EUROPEEN

(11) **EP 0 592 331 B1**
(45) Date de publication et mention de la délivrance du brevet: **26.05.1999**
(21) Numéro de dépôt: 93402513.1
(22) Date de dépôt: 11.10.1993
(51) Int. Cl.: H04Q 11/00

(54) **Matrice de commutation optique**
Optische Schaltmatrix
Optical switching matrix

(30) Priorité: 09.10.1992 FR 9212018
(43) Date de publication de la demande: 13.04.1994
(73) Titulaire: ALCATEL, 75008 Paris (FR)
(72) Inventeur: Sotom, Michel, F-75015 Paris (FR)
(74) Mandataire: Sciaux, Edmond

(56) Documents cités:
- EP-A- 0 492 852
- WO-A-92/10770
- PROCEEDINGS, INTERNATIONAL SWITCHING SYMPOSIUM, 27 MAI-1 JUIN 1990, VOL.III PAGES 21-26, STOCKHOLM SE , XP130869 A.M. HILL ET AL 'A Distributed Wavelength Switching Architecture for the TPON Local Network'
- IEEE JOURNAL ON SELECTED AREAS IN COMMUNICATION vol. 8, no. 6 , Aoüt 1990 , NEW YORK US pages 948 - 964 XP208590 C.A. BRACKETT 'Dense Wavelength Division Multiplexing Networks: Principles and Applications'
- TRANSACTIONS OF THE INSTITUTE OF ELECTRONICS, INFORMATION AND COMMUNICATION ENGINEERS OF JAPAN vol. 74, no. 1 , Janvier 1991 , TOKYO JP pages 84 - 91 XP230386 M. AKIYAMA ET AL 'Photonic Switching System'
- TECHNICAL DIGEST, OPTICAL FIBER COMMUNICATION CONFERENCE, 2-7 FEV. 1992, VOL. 5 PAGE 137, SAN JOSE US , XP341644 E-J. BACHUS ET AL 'Optical Transparent 4X4 Switching Node for Frequency Multiplexed Signals'
- ELECTRONICS LETTERS vol. 28, no. 13 , 18 Juin 1992 , STEVENAGE GB pages 1268 - 1270 XP301528 H. OBARA ET AL 'Star Coupler Based WDM Switch Employing Tunable Device with Reduced Tunability Range'
- IEEE TRANSACTIONS ON PARALLEL AND DISTRIBUTED SYSTEMS vol. 1, no. 2 , Mai 1990 , NEW YORK US pages 47 - 53 XP128311 M. FUJIWARA ET AL 'Line Capacity Expansion Schemes in Photonic Switching'

## Description

La présente invention concerne une matrice de commutation optique utilisable notamment dans un central de commutation ou noeud d'un réseau de transmission d'information à fibres optiques. Cette matrice est également utilisable dans tout autre organe de routage d'un tel réseau.

Une telle matrice comporte des entrées, chacune pour recevoir une information à transmettre, et des sorties pour transmettre chacune à l'extérieur de la matrice celles de ces informations qui ont été reçues sur l'une de ces entrées à laquelle cette sortie est temporairement raccordée. Des signaux de commutation sont reçus par la matrice pour commander le début et la fin de la période pendant laquelle cette sortie est raccordée à cette entrée. A l'intérieur de la matrice les informations à transmettre sont portées par des ondes lumineuses.

Une caractéristique importante d'une telle matrice est son aptitude à réaliser facilement, lorsque cela est nécessaire, une opération de collection d'informations dans laquelle plusieurs informations distinctes sont reçues respectivement sur plusieurs entrées et doivent être transmises toutes sur une même sortie.

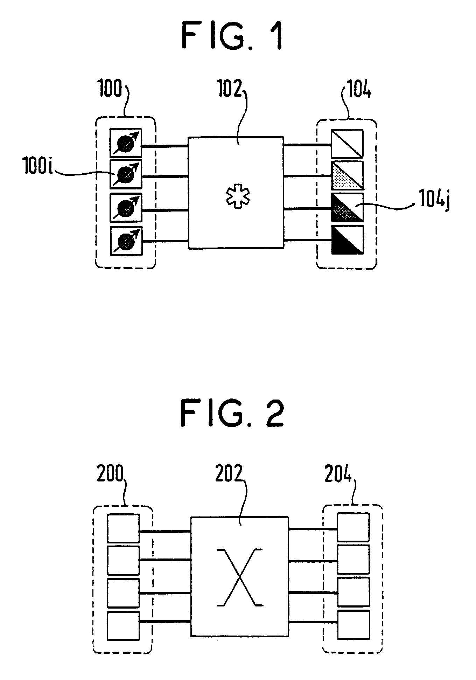

Une première matrice de commutation optique connue comporte les éléments suivants (voir figure 1):
- Un nombre Z d'émetteurs de lumière tels que l'émetteur 100i, l'ensemble de ces émetteurs étant désigné par la référence 100. Chacun de ces émetteurs a une longueur d'onde sur laquelle il émet une onde optique porteuse. Cette onde est modulée par une information à transmettre qui est reçue par cet émetteur, par exemple sous forme électrique. Ces émetteurs constituent des organes accordés sur des longueurs d'onde.
- Un distributeur d'ondes 102. Un tel distributeur est muni de Z entrées raccordées respectivement aux Z émetteurs 100 et de Z sorties et sera appelé ci-après "distributeur en étoile". Il transmet en permanence sur chacune de ses sorties une fraction d'un mélange constitué par toutes les ondes qu'il reçoit sur ses entrées. Un tel distributeur est souvent appelé dans la littérature "coupleur en étoile".
- Enfin Z filtres tels que 104j, désignés globalement par la référence 104 et raccordés respectivement aux Z sorties du distributeur 102. Un tel filtre a une longueur d'onde et constitue un organe accordé sur cette longueur d'onde. Il transmet sélectivement les ondes dont la longueur d'onde porteuse est égale à sa propre longueur d'onde. Les filtres tels que 104 seront dits ci-après "fixes" pour indiquer que leurs longueurs d'onde sont fixes.

Les émetteurs seront dits ci-après "commandés" pour indiquer que leurs longueurs d'onde sont commandées, en fonction des signaux de commutation reçus par la matrice, pour que lorsqu'une information à transmettre est reçue par un émetteur 100i et lorsque cette information doit être transmise sous forme optique en sortie d'un filtre 104j dont la longueur d'onde est Lj, ce émetteur soit accordé sur cette longueur d'onde Lj, c'est-à-dire que sa longueur d'onde soit rendue égale à Lj.

Cette première matrice connue utilise une technique de routage par la longueur d'onde appelée internationalement "Wavelength routing". Cette technique est notamment décrite dans un document Brackett: "Dense Wavelength Division Multiplexing Networks : Principles and Applications" Charles A. BRACKETT, IEEE Journal on Selected Areas in Communications, Vol.8. No.6.August 1990 p 948-964.

Cette première matrice connue peut être appelée "spectrale" parce qu'elle utilise diverses longueurs d'onde du spectre optique.

Une deuxième matrice connue est représentée à la figure 2 et peut être appelée "spatiale" parce qu'elle crée pour la lumière des trajets guidés variables dans l'espace. Elle comporte par exemple,
- Z entrées 200 recevant sous forme optique des informations à transmettre,
- Z sorties 204 transmettant ces informations sous forme optique,
- et un distributeur à commutation 202 raccordant de manière variable ces entrées à ces sorties. Pour réaliser ces raccordements, ce distributeur reçoit des signaux de commutation qui commandent des trajets guidés formés au sein de ce distributeur entre ces entrées et ces sorties. Ces trajets sont guidés de la même manière pour des ondes pouvant présenter des longueurs d'onde diverses. Un tel distributeur est bien connu et constitue à lui seul une matrice de commutation optique, telle que décrite dans un document Hermès : "Optical Routing - State of the art and future aspects", Thomas Hermes, Proceedings ECOC'86, pp 33-38. Certains tels distributeurs permettent la diffusion d'informations d'une entrée vers plusieurs sorties, tandis que d'autres permettent la collection sur une même sortie d'informations reçues sur plusieurs entrées.

Ces matrices de commutation optique connues présentent notamment l'inconvénient que leurs capacités sont limitées à des valeurs plus faibles que souhaité, ces capacités étant exprimées par les nombres de leurs entrées et de leurs sorties. Dans le cas d'une matrice spectrale, cette capacité est limitée par le nombre des longueurs d'onde porteuse disponibles. Ces longueurs d'onde sont celles qui sont comprises dans une bande spectrale dont la largeur est limitée par diverses raisons telles que la faisabilité et le coût des composants et leur compatibilité avec d'autres organes du réseau. Ces longueurs doivent être en même temps suffisamment éloignées les unes des autres pour éviter une diaphonie. Dans le cas d'une matrice spatiale cette capacité est limitée par l'encombrement des trajets guidés qui doivent être préconstitués dans le distributeur à commutation. Cependant des matrices de plus grande capacité peuvent être construites par association de matrices élémentaires de capacité limitée. Mais ces associations nécessitent trois étages successifs de ces matrices élémentaires, de manière à ce que n'importe quel ensemble de connexions parmi toutes les connexions possibles puissent être réalisés simultanément. Ceci apparaît dans le document Hermès precedemment cité et dans un document Clos: "A Study of Non-Blocking Switching Networks" Charles Clos, Bell System Technical Journal, Vol.32, pp-406-424 (1953).

Un document JOHANSSON (WO -A-9 210 770) et un document HILL : (PROCEEDINGS, INTERNATIONAL SWITCHING SYMPOSIUM, 27 mai-1 juin 1990, Vol II, pages 21-26, Stockholm, SE; A.M. HILL et al.) décrivent des matrices de commutation optique composites. Chaque telle matrice associe une pluralité de matrices élémentaires du type spatial à des organes aptes à constituer une pluralité de matrices du type spectral. Ces organes incluent des émetteurs et des filtres accordables et des coupleurs en étoile. Ils sont associés aux matrices spatiales selon des architectures qui déterminent les performances des matrices composites.

Ces matrices composites connues présentent notamment l'inconvénient que leurs capacités ne sont pas aussi grandes que cela serait souhaitable.

La présente invention a notamment pour but de permettre une réalisation simple d'une matrice de commutation optique présentant à la fois une capacité accrue et un encombrement limité tout en permettant d'utiliser seulement, pour sa réalisation, des organes disponibles à des coûts limités et en permettant la réalisation facile d'une collection d'information lorsque cela apparait nécessaire.

Et dans ce but elle a pour objet une matrice de commutation optique conforme à la revendication 1 annexée.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Ces figures représentent des matrices de commutation optique.

La figure 1 représente une première matrice connue et décrite ci-avant.

La figure 2 représente une deuxième matrice connue et décrite ci-avant.

La figure 3 représente une première matrice selon la présente invention.

La figure 4 représente une deuxième matrice selon la présente invention, les organes de cette deuxième matrice étant répartis entre deux noeuds d'un réseau de télécommunication optique.

Les deux matrices selon la présente invention utilisent une même succession de longueurs d'onde porteuse. Elles comportent des organes homologues qui vont être indiqués d'abord dans le cas de la première de ces matrices, deux organes étant dits homologues lorsqu'ils assurent les mêmes fonctions en relation éventuelle avec des organes eux-mêmes homologues. Les signes de référence d'un organe de la deuxième matrice comportent les mêmes lettres majuscules que ceux de l'organe homologue de la première matrice avec une apostrophe en plus, l'organe C'1 de la deuxième matrice étant par exemple l'homologue de l'organe C1 de la première. Les lettres minuscules représentent des indices constitués par des nombres entiers.

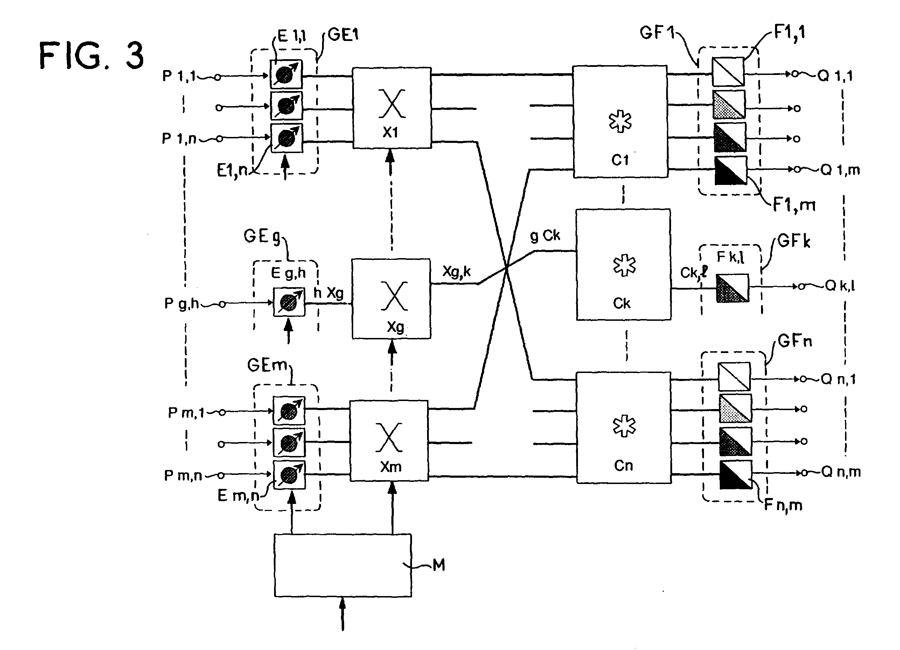

De même que les deux matrices connues précédemment décrites, chaque matrice selon la présente invention comporte, comme représenté à la figure 3, les éléments suivants:
- Un groupe d'émetteurs E1,1...E1,n se succèdant et ayant des rangs 1...n dans ce groupe. Chaque émetteur est muni d'une entrée P1,1....P1,n de même rang pour recevoir une information à transmettre, cette entrée constituant une entrée de cette matrice. Il est piloté par cette information pour émettre une onde optique portant cette information et présentant une dite longueur d'onde porteuse constituant une longueur d'onde de cet émetteur, cette longueur d'onde étant commandée. Il est typiquement constitué par un laser semi-conducteur.
- Un distributeur en étoile tel que Ck. Un tel distributeur comporte une succession d'entrées pour recevoir chacune une onde optique, chacune de ces entrées telle que gCk ayant un rang tel que g dans cette succession. Ce distributeur forme un mélange de toutes ces ondes. Il comporte encore une succession de sorties telles que Ck,l, chacune de ces sorties ayant un rang tel que 1 dans cette succession et transmettant un groupe d'ondes constitué par une fraction de ce mélange.
- Un groupe de filtres tel que GF1. Ce groupe est constitué de filtres F1,1...F1,m se succèdant et ayant des rangs 1...m dans ce groupe. Chacun de ces filtres a une longueur d'onde constituée par une dite longueur d'onde porteuse sur laquelle ce filtre est accordé. Tel le filtre Fk,l il est raccordé en entrée à une sortie Ck,l d'un distributeur en étoile Ck. Il a une sortie Q1,1 ayant un même rang que ce filtre et constituant une sortie de la matrice pour transmettre sélectivement en sortie de cette matrice une onde dont la longueur d'onde est celle de ce filtre.
- Cette matrice comporte enfin comme connu un organe de gestion M recevant des signaux de commutation associés à des informations à transmettre. Ces signaux désignent, pour chaque telle information reçue par une entrée telle que Pg,h, au moins une sortie de cette matrice telle que Qk,l devant transmettre cette information. Cet organe de gestion commande les longueurs d'onde des émetteurs pour que cette information soit effectivement transmise par la sortie ainsi désignée.

Plus spécifiquement, selon la présente invention, cette matrice comporte les éléments suivants:
- Un ensemble d'émetteurs E1,1...Em,n. Cet ensemble est constitué par une succession dedits groupes d'émetteurs GE1...GEm dans laquelle ces groupes ont des rangs 1...m.
- Un groupe de distributeurs à commutation X1...Xm se succèdant en ayant des rangs 1...m dans ce groupe. Chacun de ces distributeurs tel que Xg est apte à distribuer des ondes optiques. Il comporte une succession d'entrées telles que hXg ayant des rangs h dans cette succession, chaque entrée d'un distributeur à commutation étant raccordée à l'émetteur tel que Egh qui a le même rang h que cette entrée et qui appartient au groupe d'émetteurs tel que GEg qui a le même rang g que ce distributeur. Il comporte encore une succession de sorties telles que Xgk dans laquelle ces sorties ont des rangs tels que k. Il est commandé par l'organe de gestion M lorsqu'il reçoit une onde optique sur une de ses entrées pour transmettre cette onde par au moins une de ses sorties sélectionnée par cet organe de gestion.
- Un groupe de dits distributeurs en étoiles C1...Cn formant une succession dans laquelle ils ont des rangs 1...n. Chaque entrée telle que gCk de chacun de ces distributeurs en étoiles tels que Ck est raccordée à une sortie telle que Xgk ayant le même rang k que ce distributeur en étoile et appartenant à un distributeur à commutation tel que Xg ayant le même rang g que cette entrée.
- Enfin un ensemble de filtres F1,1...Fn,m constitué par une succession dedits groupes de filtres GF1...GFn dans laquelle ces groupes ont des rangs 1...n. Chaque filtre tel que Fk,l d'un groupe de filtres tel que GFk est raccordé à une sortie qui a le même rang 1 que ce filtre et qui appartient au distributeur en étoile tel que Ck qui a le même rang k que ce groupe de filtres.

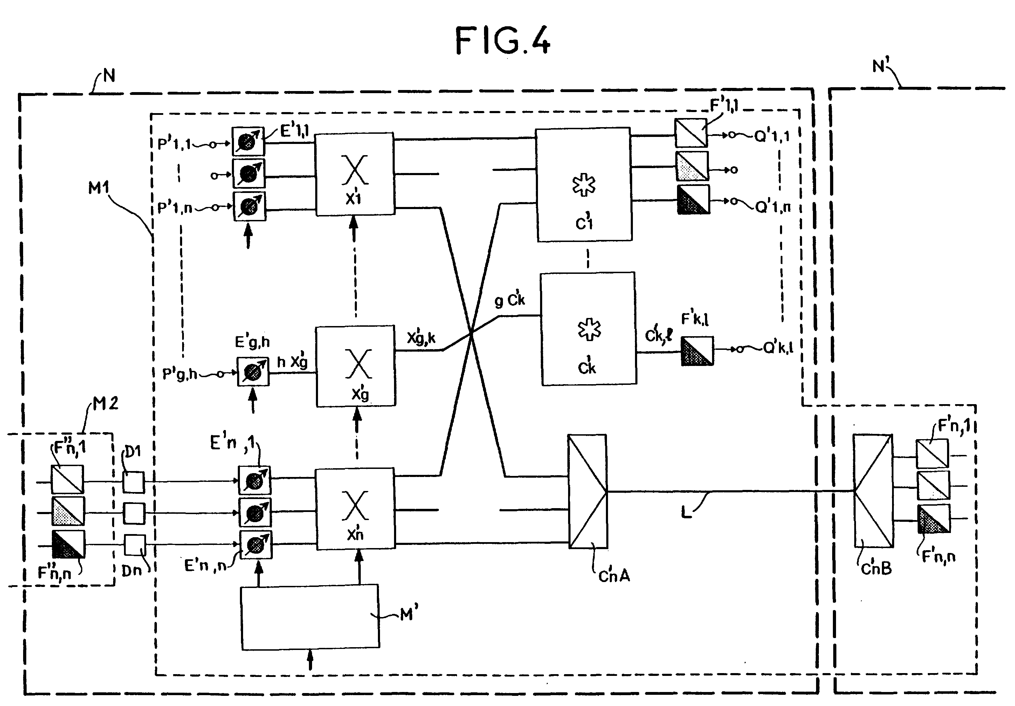

Conformément à la figure 4 la deuxième matrice selon l'invention M1 appartient à un réseau de télécommunication comportant plusieurs noeuds tels que N et N' situés à distance les uns des autres et reliés par des fibres optiques de liaison telles que L. Ces fibres de liaison guident des multiplex spectraux constitués chacun de plusieurs ondes présentant des longueurs d'onde différentes et portant des informations respectives. Par ailleurs chaque noeud tel que N présente une pluralité d'entrées telles que P'1,1 et P'g, h et de sorties telles que Q'1,1 et Q'k,l, ces entrées et sorties constituant des accès locaux pour communiquer avec des usagers raccordés à ce noeud.

Dans la matrice M1 le nombre m est égal au nombre n. Cette matrice diffère de la première par le fait que l'un au moins des distributeurs en étoiles, par exemple de distributeur Cn est remplacé par l'ensemble d'un multiplexeur C'nA et d'un démultiplexeur C'nB. Le multiplexeur C'nA appartient à un noeud N du réseau. Le démultiplexeur C'nB appartient à un noeud suivant N' du réseau et est relié au multiplexeur C'nA par la fibre de liaison L. Les filtres F'n,1...F'n, m sont inclus dans ce noeud suivant N'.

Le noeud N inclue en outre un démultiplexeur non représenté analogue au démultiplexeur C'nB, et des filtres tels que F"n, 1...F''n,n alimentés par ce démultiplexeur et appartenant à une autre matrice de commutation M2, par exemple semblable à la matrice M1. Les autres organes de cette autre matrice sont inclus dans un noeud précédent non représenté.

Les signaux fournis par ces filtres sous forme optique sont mis sous forme électrique par des détecteurs D1...Dn qui sont munis de circuits électroniques, notamment amplificateurs, pour moduler les ondes fournies par les émetteurs E'n,1...E'n,n.

On comprendra qu'une matrice de commutation peut, sans sortir du cadre de la présente invention, être réalisée en incluant non seulement les éléments décrits ci-dessus mais aussi d'autres éléments offrant certaines possibilités complémentaires.

## Revendications

1. Matrice de commutation optique comportant :
- une succession (E1,1....Em.n) de groupes d'émetteurs, chaque émetteur (Eg,h) de chaque groupe (GEg) étant apte à émettre une onde optique présentant une longueur d'onde commandée et portant une information à transmettre reçue par cet émetteur,
- une succession de distributeurs à commutation (X1...Xm) correspondant aux dits groupes d'émetteurs, chacun de ces distributeurs ayant des entrées (hXg) et des sorties (Xg,k) et étant apte à guider les ondes optiques selon des trajets de raccordement formés en son sein, selon commande, entre ces entrées et ces sorties, chacune des entrées d'un distributeur à commutation recevant l'onde optique émise par un dit émetteur correspondant à cette entrée au sein du groupe d'émetteurs correspondant à ce distributeur,
- un groupe (C1...Cn) de distributeurs en étoile ayant chacun (Ck) des entrées (gCk) et des sorties (Ck,l) et raccordant en permanence toutes ces entrées à toutes ces sorties, les diverses entrées de chacun de ces distributeurs en étoile étant raccordées à des sorties de divers dits distributeurs à commutation et les diverses sorties de chaque dit distributeur à commutation étant raccordées à des entrées de divers dits distributeurs en étoile,
- et pour chaque dite sortie (Ck,l) d'un distributeur en étoile (Ck), un filtre (Fk,I) raccordé à cette sortie pour transmettre sélectivement les ondes optiques apparaissant sur cette sortie et ayant une longueur d'onde de ce filtre, les filtres raccordés aux diverses sorties de chaque distributeur en étoile ayant des longueurs d'onde diverses.

2. Matrice selon la revendication 1, cette matrice utilisant une succession de longueurs d'onde porteuses et comportant:
- un groupe d'émetteurs (GE1) constitué d'émetteurs (E1,1...E1,n) se succèdant et ayant des rangs (1...n) dans ce groupe, chaque dit émetteur étant muni d'une entrée (P1,1...P1,n) de même rang pour recevoir une information à transmettre, cette entrée constituant une entrée de cette matrice, cet émetteur étant piloté par cette information pour émettre une onde optique portant cette information et présentant une dite longueur d'onde porteuse constituant une longueur d'onde de cet émetteur, cette longueur d'onde étant commandée,
- un distributeur en étoile (Ck) comportant une succession d'entrées pour recevoir chacune une dite onde optique, chacune de ces entrées (gCk) ayant un rang (g) dans cette succession, ce distributeur formant un mélange de toutes ces ondes et comportant encore une succession de sorties (Ck,l), chacune de ces sorties ayant un rang (1) dans cette succession et transmettant un groupe d'ondes constitué par une fraction de ce mélange,
- et un groupe de filtres (GF1) constitué de filtres (F1,1...F1,m) se succèdant et ayant des rangs (1...m) dans ce groupe, chacun de ces filtres ayant une longueur d'onde constituée par une dite longueur d'onde porteuse sur laquelle ce filtre est accordé, chacun de ces filtres (Fk,1) étant raccordé en entrée à une dite sortie (Ck,l) d'un dit distributeur en étoile (Ck), ce filtre étant muni d'une sortie (Q1,1) ayant un même rang que ce filtre et constituant une sortie de ladite matrice pour transmettre sélectivement en sortie de cette matrice une onde dont la longueur d'onde est celle de ce filtre,
- cette matrice comportant encore un organe de gestion (M) recevant des signaux de commutation associés à desdites informations à transmettre, ces signaux désignant, pour chaque telle information reçue par une dite entrée (Pg,h), au moins une sortie de cette matrice (Qk,l) devant transmettre cette information, cet organe de gestion commandant les longueurs d'onde desdits émetteurs pour que cette information soit effectivement transmise par la sortie ainsi désignée,
cette matrice comportant :
- un ensemble d'émetteurs (E1,1...Em,n) constitué par une succession desdits groupes d'émetteurs (GE1...GEm) dans laquelle ces groupes ont des rangs (1...m),
- un groupe de distributeurs à commutation (X1...Xm) se succèdant en ayant des rangs (1...m) dans ce groupe, chacun de ces distributeurs (Xg) étant apte à distribuer desdites ondes optiques, et comportant une succession d'entrées (hXg) ayant des rangs (h) dans cette succession, chaque entrée d'un distributeur à commutation étant raccordée à l'émetteur (Egh) qui a le même rang (h) que cette entrée et qui appartient au groupe d'émetteurs (GEg) qui a le même rang (g) que ce distributeur, chacun de ces distributeurs à commutation comportant encore une succession de sorties (Xgk) dans laquelle ces sorties ont des rangs (k), ce distributeur étant commandé par ledit organe de gestion (M) lorsqu'il reçoit une onde optique sur une de ses entrées pour transmettre cette onde par au moins une de ses sorties sélectionnée par cet organe de gestion,
- un groupe desdits distributeurs en étoiles (C1...Cn) formant une succession dans laquelle ils ont des rangs (1...n), chaque entrée (gCk) de chacun de ces distributeurs en étoiles (Ck) étant raccordée à une sortie (Xgk) ayant le même rang que ce distributeur en étoile et appartenant à un distributeur à commutation (Xg) ayant le même rang (g) que cette entrée,
- et un ensemble de filtres (F1,1...Fn,m) constitué par une succession dedits groupes de filtres (GF1...GFn) dans laquelle ces groupes ont des rangs (1...n), chaque filtre (Fk,l) d'un groupe de filtres (GFk) étant raccordé à une sortie qui a le même rang (1) que ce filtre et qui appartient au distributeur en étoile (Ck) qui a le même rang (k) que ce groupe de filtres.

3. Matrice selon la revendication 2, caractérisée par le fait que l'un au moins desdits distributeurs en étoiles est constitué d'un multiplexeur spectral (C'nA) relié par une fibre de liaison (L) à un démultiplexeur (C'nB) situé à distance de ce multiplexeur, ledit ensemble d'émetteurs (E'1,1...E'n,n), lesdits distributeurs à commutation (X'1...X'n) et ce multiplexeur étant inclus dans un noeud (N) d'un réseau de télécommunication, ce démultiplexeur et les filtres (F'nl...F'n,n) raccordés à ce démultiplexeur étant inclus dans un autre noeud (N') de ce réseau, ces deux noeuds étant reliés par cette fibre de liaison.

## Patentansprüche

1. Optische Schaltmatrix, die aufweist:
- eine Folge (E1,1.,.Em,n) von Sendergruppen, wobei jeder Sender (Eg,h) jeder Gruppe (GEg) fähig ist, eine optische Welle auszusenden, die eine gesteuerte Wellenlänge aufweist und eine von diesem Sender empfangene, zu übertragende Information trägt,
- eine Folge von den Sendergruppen entsprechenden Verteilern (X1...Xm) mit Umschaltung, wobei jeder dieser Verteiler Eingänge (hXg) und Ausgänge (Xg,k) aufweist und fähig ist, die optischen Wellen je nach Befehl entlang in seinem Inneren ausgebildeten Verbindungswegen zwischen diesen Eingängen und diese Ausgängen zu leiten, wobei jeder der Eingänge eines Verteilers mit Umschaltung die optische Welle empfängt, die von einem diesem Eingang entsprechenden Sender im Inneren der Sendergruppe gesendet wird, die diesem Verteiler entspricht,
- eine Gruppe (C1...Cn) von sternförmigen Verteilern, die jeweils (Ck) Eingänge (gCk) und Ausgänge (Ck,l) aufweisen und alle diese Eingänge mit allen diesen Ausgängen dauerhaft verbinden, wobei verschiedene Eingänge jedes dieser sternförmigen Verteiler mit Ausgängen von verschiedenen Verteilern mit Umschaltung verbunden sind und die verschiedenen Ausgänge jedes der Verteiler mit Umschaltung mit Eingängen von verschiedenen sternförmigen Verteilern verbunden sind,
- und für jeden Ausgang (Ck,l) eines sternförmigen Verteilers (Ck) ein Filter (Fk,l), das mit diesem Ausgang verbunden ist, um die optischen Wellen selektiv zu übertragen, die an diesem Ausgang auftreten und eine Wellenlänge dieses Filters haben, wobei die mit verschiedenen Ausgängen jedes sternförmigen Verteilers verbundenen Filter verschiedene Wellenlängen haben.

2. Matrix nach Anspruch 1, wobei diese Matrix eine Folge von Trägerwellen benutzt und aufweist:
- eine Sendergruppe (GEl), die aus Sendern (El,l...El,n) besteht, die aufeinanderfolgen und in dieser Gruppe Ränge (l...n) haben, wobei jeder Sender mit einem Eingang (Pl,l...Pl,n) mit demselben Rang versehen ist, um eine zu übertragende Information zu empfangen, wobei dieser Eingang einen Eingang dieser Matrix bildet, wobei dieser Sender von dieser Information gesteuert wird, um eine optische Welle auszusenden, die diese Information trägt und eine Trägerwellenlänge aufweist, die eine Wellenlänge dieses Senders bildet, wobei diese Wellenlänge gesteuert ist,
- einen sternförmigen Verteiler (Ck), der eine Folge von Eingängen aufweist, um jeweils eine optische Welle zu empfangen, wobei jeder dieser Eingänge (gCk) in dieser Folge einen Rang (g) haben, wobei dieser Verteiler eine Mischung aller dieser Wellen bildet und noch eine Folge von Ausgängen (Ck,l) aufweist, wobei jeder dieser Ausgänge in dieser Folge einen Rang (l) hat und eine aus einem Teil dieser Mischung bestehende Wellengruppe überträgt,
- und eine Gruppe von Filtern (GF1), die aus Filtern (Fl,l...Fl,m) besteht, die aufeinanderfolgen und in dieser Gruppe Ränge (l...m) haben, wobei jedes dieser Filter eine Wellenlänge hat, die aus einer Trägerwellenlänge besteht, auf welche dieses Filter abgestimmt ist, wobei jedes dieser Filter (Fk,l) am Eingang mit einem Ausgang (Ck,l) eines sternförmigen Verteilers (Ck) verbunden ist, wobei dieses Filter mit einem Ausgang (Ql,l) mit dem gleichen Rang wie dieses Filter versehen ist und einen Ausgang der Matrix bildet, um am Ausgang dieser Matrix selektiv eine Welle zu übertragen, deren Wellenlänge diejenige dieses Filters ist,
- wobei diese Matrix noch ein Steuermittel (M) aufweist, das zu den zu übertragenden Informationen gehörige Umschaltsignale empfängt, wobei diese Signale für jede solche von einem Eingang (Pg,h) empfangene Information wenigstens einen Ausgang dieser Matrix (Qk,l) bezeichnet, der diese Information übertragen soll, wobei dieses Steuermittel die Wellenlängen der Sender steuert, damit diese Information vom so bezeichneten Ausgang tatsächlich übertragen wird,
wobei diese Matrix aufweist:
- einen Aufbau von Sendern (E1,1...Em,n), der aus einer Folge der Sendergruppen (GEl...GEm) besteht, in welcher diese Gruppen Ränge (l...m) haben,
- eine Gruppe von Verteilern (X1...Xm) mit Umschaltung, die aufeinanderfolgen, wobei sie in dieser Gruppe Ränge (l...m) haben, wobei jeder dieser Verteiler (Xg) fähig ist, die optischen Wellen zu verteilen, und eine Folge von Eingängen (hXg) mit Rängen (h) in dieser Folge aufweist, wobei jeder Eingang eines Verteilers mit Umschaltung mit dem Sender (Egh) verbunden ist, der den gleichen Rang (h) wie dieser Eingang hat und der zu der Sendergruppe (GEg) gehört, die den gleichen Rang (g) wie dieser Verteiler hat, wobei jeder dieser Verteiler mit Umschaltung noch eine Folge von Ausgängen (Xgk) aufweist, in welcher diese Ausgänge Ränge (k) haben, wobei dieser Verteiler vom Steuermittel (M) gesteuert wird, wenn er auf einem seiner Eingänge eine optische Welle empfängt, um diese Welle über wenigstens einen von diesem Steuermittel ausgewählten seiner Eingänge zu übertragen,
- eine Gruppe von sternförmigen Verteilern (Cl...Cn), die eine Folge bilden, in welcher sie Ränge (1...n) haben, wobei jeder Eingang (gCk) jedes dieser sternförmigen Verteiler (Ck) mit einem Ausgang (Xgk) verbunden ist, der den gleichen Rang wie dieser sternförmige Verteiler hat und zu einem Verteiler (Xg) mit Umschaltung gehört, der den gleichen Rang (g) wie dieser Eingang hat,
- und einen Aufbau von Filtern (Fl,1...Fn,m), der aus einer Folge von Filtergruppen (GFl...GFn) besteht, in welcher diese Gruppen Ränge (1...n) haben, wobei jedes Filter (Fk,l) einer Filtergruppe (GFk) mit einem Ausgang verbunden ist, der den gleichen Rang (1) wie dieses Filter hat und der zu einem sternförmigen Verteiler (Ck) gehört, der den gleichen Rang (k) wie diese Filtergruppe hat.

3. Matrix nach Anspruch 2, dadurch gekennzeichnet, dass wenigstens einer der sternförmigen Verteiler aus einem Spektralmultiplexer (C'nA) besteht, der über eine Verbindungsfaser (L) mit einem Demultiplexer (C'nB) verbunden ist, der sich in einem Abstand von diesem Multiplexer befindet, wobei der Aufbau von Sendern (E'l,1...E'n,n), die Verteiler (X'1...X'n) mit Umschaltung und dieser Multiplexer in einem Knoten (N) eines Telekommunikationsnetzes enthalten sind, wobei dieser Demultiplexer und die mit diesem Demultiplexer verbundenen Filter (F'n1...F'n,n) in einem weiteren Knoten (N') dieses Netzes enthalten sind, wobei diese beiden Knoten durch diese Verbindungsfaser verbunden sind.

## Claims

1. An optical switching matrix comprising
a succession (E1,1 ..., Em,n) of groups of emitters, each emitter (Eg,h) in each group (GEg) being suitable for emitting an optical wave having a controlled wavelength and carrying data to be transmitted that is received by the emitter:
a succession of switching distributors (X1, ..., Xm) corresponding to said groups of emitters, each of the distributors having inputs (hXg) and outputs (Xg,k), and being suitable for guiding the optical waves on command along connection paths formed within it between said inputs and said outputs, each of the inputs of a switching distributor receiving the optical wave emitted by one of said emitters corresponding to said input within the group of emitters corresponding to said distributor;
a group of star distributors (C1, ..., Cn), each of which star distributors (Ck) has inputs (gCk) and outputs (Ck,l) and permanently connects all of said inputs to all of said outputs, the various inputs of each of said star distributors being connected to outputs of various ones of said switching distributors, and the various outputs of each of said switching distributors being connected to inputs of various ones of said star distributors; and
for each of said outputs (Ck,l) of a star distributor (Ck), a filter (Fk,l) connected to said output for selectively transmitting those of the optical waves appearing at said output which have the wavelength of the filter, the filters connected to the various outputs of each star distributor having various wavelengths.

2. A matrix according to claim 1, the matrix using a succession of carrier wavelengths, and including:
a group of emitters (GE1) constituted by emitters (E1,1, ..., E1,n) in succession and having ranks (1, ..., n) in the group, each of said emitters being provided with an input (P1,1, ..., P1,n) of the same rank for receiving data to be transmitted, the input constituting an input of the matrix, the emitter being controlled by the data so as to emit a light wave carrying the data and having one of said carrier wavelengths constituting a wavelength of the emitter, which wavelength is controlled;
a star distributor (Ck) including a succession of inputs (gCk), each of which receives one of said light waves and has a rank (g) in the succession, the distributor forming a mixture of all the waves and also including a succession of outputs (Ck,l), each of the outputs having a rank (1) in the succession and transmitting a group of waves constituted by a fraction of the mixture; and
a group of filters (GF1) constituted by filters (F1,1, ..., F1,m) in succession and having ranks (1, ..., m) in the group, each of the filters having a wavelength constituted by one of said carrier wavelengths to which the filter is tuned, each of the filters (Fk,l) having an input connected to one of said outputs (Ck,l) of one of said star distributors (Ck). the filter being provided with an output (Q1,1) having the same rank as the filter and constituting an output of said matrix for selectively transmitting a wave at the output of the matrix, which wave has the same wavelength as the filter;
the matrix further including a management member (M) receiving switching signals associated with said data to be transmitted, the signals designating, for each such item of data received via one of said inputs (Pg,h), at least one output (Qk,l) of the matrix, which output is to transmit the item of data, the management member controlling the wavelengths of said emitters so that the item of data is in fact transmitted via the output which is designated in this way;
the matrix including:
a set of emitters (E1,1, ..., Em,n) constituted by a succession of said groups of emitters (GE1, GEm) in which succession the groups have ranks (1, ..., m);
a group of switching distributors (X1, ..., Xm) in succession, having ranks (1, ..., m) in the group, each of which distributors (Xg) is capable of distributing said light waves, and includes a succession of inputs (hXg) having ranks (h) in the succession, each switching distributor input being connected to that emitter (Egh) which has the same rank (h) as the input, and which belongs to the emitter group (GEg) that has the same rank (g) as the switching distributor, each of the switching distributors also including a succession of outputs (Xgk) in which the outputs have ranks (k), the switching distributor being controlled by said management member (M) when it receives a light wave via one of its inputs so that it transmits the wave via at least one of its outputs selected by the management member;
a group of said star distributors (C1, ..., Cn) forming a succession in which they have ranks (1, ..., n), each input (gCk) of each of the star distributors (Ck) being connected to an output (Xgk) having the same rank as the star distributor and belonging to a switching distributor (Xg) that has the same rank (g) as the input; and
a set of filters (F1,1, ..., Fn,m) constituted by a succession of said groups of filters (GF1, ..., GFn) in which succession the groups have ranks (1, ..., n), each filter (Fk,l) in a group of filters (GFk) being connected to an output which has the same rank (1) as the filter. and which belongs to the star distributor (Ck) that has the same rank (k) as the group of filters.

3. A matrix according to claim 2. characterized by the fact that at least one of said star distributors is constituted by a wavelength multiplexer (C'nA) connected via a link fiber (L) to a demultiplexer (C'nB) remote from the multiplexer, said set of emitters (E'1,1, ..., E'n.n). said switching distributors (X'1, .... X'n), and the multiplexer being included in a node (N) of a telecommunications network, the demultiplexer and the filters (F'n1, .... F'n,n) connected to the demultiplexer being included in another node (N') of the network, the two nodes being connected together via the link fiber.
